# EUROPEAN PATENT SPECIFICATION

(11) **EP 4 044 882 B1**
(45) Date of publication and mention of the grant of the patent: **17.01.2024**
(21) Application number: 20788818.1
(22) Date of filing: 14.10.2020
(51) Int. Cl.: A47J 31/46

(54) **AN APPARATUS FOR PREPARING A HOT LIQUID DRINK**
VORRICHTUNG ZUR HERSTELLUNG EINES HEISSEN FLÜSSIGEN GETRÄNKS
APPAREIL DE PRÉPARATION D'UNE BOISSON LIQUIDE CHAUDE

(30) Priority: 14.10.2019 EP 19202887
(43) Date of publication of application: 24.08.2022
(73) Proprietor: Koninklijke Philips N.V., 5656 AG Eindhoven (NL)
(72) Inventor: LOOPSTRA, Kasper, Roelof, 5656 AE Eindhoven (NL); FAVERO, Andrea, 5656 AE Eindhoven (NL); ZWART, Bart-Jan, 5656 AE Eindhoven (NL)
(74) Representative: Vollering, Stefanus Franciscus Maria
(86) International application number: PCT/EP2020/078813
(87) International publication number: WO 2021/074172

(56) References cited:
- US-A1- 2008 295 698
- US-A1- 2013 078 342
- US-A1- 2014 356 501
- US-A1- 2015 342 393

## Description

### FIELD OF THE INVENTION

This invention relates to apparatus for preparing hot drinks, such as coffee machines.

### BACKGROUND OF THE INVENTION

Hot drinks machines generally provide the pumping of water from a hot water tank to a location where the hot drink is prepared, such as a brew chamber of a coffee machine. Pumping may also be used to deliver water to the hot water tank to replenish the hot water tank, for example if a batch heating process is used rather than an in-line heating process.

Pumps may also be used in apparatus for preparing hot drinks for other drink constituents such as milk.

The pumping process is typically needed when the hot liquid reaches a desired temperature. Thermostatic control of the pump is therefore needed, which requires control circuitry, adding complexity and cost to the apparatus. The pump is also typically an electric pump, which generates noise which is often disliked by users.

There is therefore a need for an improved pumping arrangement for use in a hot drinks apparatus.

US-A-2008/295698 disclose a hot drink maker with a thermally actuated pump, wherein the pump includes a piston and a phase change material that expands when exposed to hot water. The expansion is used to drive the piston.

US-A-2013/078342 discloses a coffee maker with a piston and a biasing element made of a shape memory alloy that deforms when reaching a certain temperature. The deformation is used to drive the piston.

### SUMMARY OF THE INVENTION

The invention is defined by the claims.

According to with an aspect of the invention, there is provided an apparatus for preparing a hot liquid drink according to claim 1.

This apparatus makes use of the expansion of a phase change material to drive the displacement of the liquid used in preparing a hot drink. The phase change is preferably from solid to liquid. The liquid to be displaced is for example water. The phase change is thus used to perform a pumping action, which may be used to deliver the liquid from the heating vessel. The use of pumping based on a phase change process makes use of heat (which may be delivered externally from, or internally within, the apparatus) as the energy supply for the pumping process, and thus avoids the need for an electric pump for that pumping process. The pumping process may also be achieved with low noise. By using the phase change at the desired temperature for the hot drink, the need for separate thermostatic control is avoided, in that the displacement takes place automatically at the desired temperature.

The phase change material may be selected to perform the displacement, and hence pumping operation, at any desired temperature for the hot liquid drink. For example, the pumping may be performed at a lower temperature than the boiling point of the liquid.

The phase change temperature (at atmospheric pressure) is for example in the range 50 degrees to 90 degrees.

The apparatus comprises a piston pump having a piston within a chamber, e.g. a cylinder, wherein the movement of the piston within the chamber is driven by the expansion of the phase change material, and the piston pump provides the liquid displacement.

The phase change material is thus used to drive a piston pump. There may be a single stroke of the piston pump to perform the desired liquid displacement, or else the piston pump may be operated repeatedly, with expansion of the phase change material (and hence driving of the piston in one direction) when a sufficient temperature is reached and contraction of the phase change material (and hence return of the piston in the opposite direction) when there is cooling of the phase change material. The piston pump may be spring-biased to the contracted state to ensure the piston returns when the piston pump cools.

The piston pump is for example mounted on the outside of the heating vessel. This enables the piston pump to be thermally coupled to the liquid, and hence heated by the same heater as is used for heating the liquid.

The apparatus further comprises a heating vessel piston within the heating vessel, and a mechanical coupling between the piston of the piston pump and the heating vessel piston, wherein movement of the heating vessel piston is for the displacement of the liquid out of the heating vessel for use in preparing the hot liquid drink.

The displacement is to deliver heated liquid out of the heating vessel, for use in making a hot drink. A small piston pump may be used to induce a larger liquid displacement from the heating vessel. The mechanical coupling thus preferably has a low mechanical advantage, such as below 0.1 or below 0.05, thereby taking advantage of the large force available from the expansion process to deliver a large amount of liquid displacement.

The heating vessel piston is for example removable from the heating vessel to allow refilling of the heating vessel.

The heating vessel is thus able to be filled by the user after use. It may for example contain enough liquid for only one portion of the hot drink, and is thus driven by the piston pump from full to empty as one process.

Each time a drink is made, the heating vessel is filled with the desired amount of liquid, and the heating of the liquid itself induces pumping of the liquid out of the heating vessel. This provides a compact and low cost arrangement.

The apparatus may further comprise a holder for containing a drink substrate, wherein the holder is coupled to the heating vessel to receive the liquid displaced out of the heating vessel.

The holder is for example used to house a coffee pad through which hot water is to be driven before passing to a cup.

The holder may comprise a lid, and the lid is adapted to open when the piston pump reaches the end of its stroke.

In this way, the holder is automatically opened at the end of the preparation of the hot drink, so that it can be seen that the drink substrate is spent, and hence needs to be removed and replaced with a new substrate for the next hot drink preparation.

The heater is for example an electric heater within the heating vessel and the apparatus further comprises an interrupt switch for interrupting electric power to the electric heater, wherein the interrupt switch is opened for instance when the piston pump reaches the end of its stroke, or in response to opening of the lid of the container.

In this way, the electric heater is automatically turned off when the preparation of the hot drink is complete.

In another example, that does not fall under the scope of the claims, the apparatus further comprises a liquid supply reservoir for containing liquid which is not heated by the heater, wherein movement of the piston of the piston pump is for the displacement of liquid into the vessel from the liquid supply reservoir.

In this example, that does not fall under the scope of the claims, the displacement is used to replenish the water in the heating vessel, for example from a larger liquid supply reservoir. The pumping may simultaneously cause liquid to be pumped out of the heating vessel, so that the pump flow drives cold liquid from the supply reservoir to the heating vessel and also drives hot liquid out of the heating vessel for making the hot drink. Thus, as the heating vessel is emptied to make a hot drink, it can be replenished. However, instead of simply refilling the heating vessel in one go (and hence dramatically cooling the contents), the heating vessel can be refilled by a sequence of pump cycles. When the liquid in the heating vessel cools, the introduction of (cold) liquid from the liquid supply reservoir stops, to allow the liquid to be heated again. Only when the liquid reaches the desired temperature, is another portion of liquid from the liquid supply reservoir added and hot water delivered for making the hot drink. Thus, while the heating vessel is refilled, the temperature remains in a desired range, so that the liquid can continue to be used for making a hot drink.

The apparatus may then further comprise a one-way flow valve between the liquid supply reservoir and the heating vessel.

In this way, one part of the pump cycle (induced by contraction of the phase change material) draws water from the liquid supply reservoir to the piston pump through the one-way flow valve, and the other part of the pump cycle (induced by expansion of the phase change material) delivers liquid from the piston pump to the heating vessel.

In another example, that does not fall under the scope of the claims, the phase change material is housed in an expandable container, and the container is in the heating vessel, and wherein expansion of the phase change material provides expansion of the container which in turn provides displacement of the liquid out of the heating vessel for use in preparing the hot liquid drink.

In this example, that does not fall under the scope of the claims, the expansion of the phase change material performs a displacement of a volume of the liquid. The displaced volume may correspond to the volume of expansion, or else there may be an arrangement to magnify the expansion of the phase change material to provide larger displacement of water. For example, a piston pump may be arranged within the volume of the heating vessel, which expands by a greater amount than the expansion of the phase change material alone. This provides an extremely simple design for a liquid displacement system.

In all examples, the apparatus is typically a coffee maker, i.e. a coffee machine or a coffee pot.

The invention also provides a method of preparing a hot liquid drink according to claim 9.

This method makes use of liquid displacement induced by expansion caused by a phase change (such as from solid to liquid) of a phase change material. The expansion is used to induce a larger volume of liquid displacement based on a mechanical advantage system. The displacement, i.e. pumping, is thus low noise and can enable a reduction in the required amount of control circuitry.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows in simplified form a heating vessel and a pump for use in an apparatus for preparing a hot liquid drink;
Figure 2 shows a first example of a coffee machine using the arrangement of Figure 1;
Figures 3A to 3F show the various steps involved in the use of the apparatus of Figure 2.
Figures 4A to 4C show a second example of a coffee machine using the arrangement of Figure 1, which second example does not fall under the scope of the claims;
Figures 5A to 5F show the various steps involved in the use of a third example of a coffee machine using the arrangement of Figure 1, which third example does not fall under the scope of the claims;
Figures 6A to 6C show three different possible configurations for the phase change material used in the machine of Figures 5A to 5F, which machine does not fall under the scope of the claims; and
Figure 7 shows how a mechanical advantage may be incorporated into the design of Figure 5A to 5F, which does not fall under the scope of the claims.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides an apparatus for preparing a hot liquid drink which makes use of expansion of a phase change material (as is for example used in a wax motor) to drive displacement of the liquid into or out of a heating vessel.

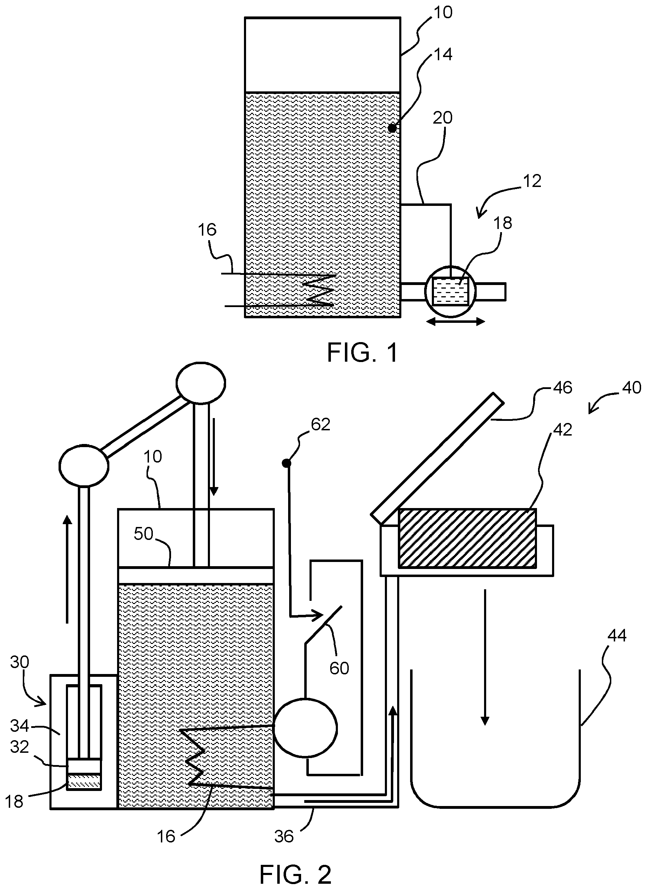

Figure 1 shows in simplified form a heating vessel 10 and a liquid displacement arrangement, i.e. a pump 12, for use in an apparatus for preparing a hot liquid drink. The heating vessel 10 is for storing a liquid 14 which is to form the basis of the hot liquid drink. The liquid is typically water, but the concept of the invention can be applied to the displacement of other liquids, such as milk. The heating vessel 10 is shown with an internal heater 16 but it could receive heat from an external heater instead.

The pump is implemented with a phase change material 18 which has a phase change temperature from one phase to another, most typically from solid to liquid, at a temperature which falls in a desired temperature range for the hot liquid drink. The phase change material is thermally coupled with the liquid as schematically shown by connection line 20. An expansion of the phase change material 18 when it changes phase, e.g. from solid to liquid, induced by heating is used to displace liquid either into or out of the heating vessel 10 (or both). Heated liquid may be displaced out to make a drink or it may be displaced in to refill the heating vessel (with colder liquid yet to be heated) or both.

This apparatus makes use of the expansion of a phase change material to drive the displacement of the liquid used in preparing a hot drink. The use of pumping based on a phase change process makes use of heat as the energy supply for the pumping process, and thus avoids the need for an electric pump for that pumping process. The pumping process may also be achieved with low noise and with automatic thermostatic control.

The phase change material 18 may for example be selected to perform the displacement, and hence pumping operation, at any desired temperature for the hot liquid drink, based on the selected chemical composition and hence material properties of the phase change material. For example, the pumping may be performed at a lower temperature than the boiling point of the liquid.

The desired temperature for the hot drink is for example in the range 50 degrees to 90 degrees, more preferably in the range 65 to 85 degrees. The phase change temperature (at atmospheric pressure) is for example in the same range of 50 degrees to 90 degrees, more preferably in the range 65 to 85 degrees. However, it may be higher, as heat will be lost in the appliance spout, beverage mug etc. The phase change temperature may for example be in the range 85 to 105 degrees.

One suitable wax is paraffin wax. Paraffin waxes have a phase change temperature, i.e. melting point, that is strongly correlated to the molecular chain length. Waxes of any length up to around one hundred carbon atoms can be separated by distillation in normal petrochemical processes at huge scale.

Other waxes can also be used. Waxes can also be mixed, yielding a melting range rather than a melting point, allowing for a more gentle pressure being exerted.

The molecular properties causing a certain melting point, and the way to change a molecule to create a higher or lower melting point, are generally known in chemistry.

The general concept explained with reference to Figure 1 may be applied to a variety of different types of hot drinks apparatus. Some examples are described below, and the same reference numbers are used to denote the same components in the figures that follow.

A first detailed example is shown in Figure 2.

This example is for example a filter coffee machine. The heating vessel 10 has an internal electric heater 16.

The phase change material 18 is integrated into a piston pump 30 having a piston 32 within a chamber 34, here a cylinder. The movement of the piston within the chamber is driven by the expansion of the phase change material 18.

The piston pump provides the liquid displacement from the heating vessel 10 to an outlet 36, which in turn leads to a hot drinks preparation unit 40 in the form of a holder for a coffee pad 42. In the hot drinks preparation unit 40, the heated water is passed through the coffee pad 42 and then flows (under gravity) to a collection vessel 44. The hot drinks preparation unit 40 has a lid 46. The user loads a coffee pad 42 into the holder of the unit 40 with the lid 46 open, and then closes the lid.

In this example, a single stroke of the piston pump 30 is used to perform a desired liquid displacement from the heating vessel to the collection vessel 44. Thus, the heating vessel is refilled after each use.

The phase change material is thermally coupled to the water in the heating vessel. For this purpose, at least a region of high thermal conductivity is provided between the contents of the heating vessel and the pump. Once the water reaches the desired temperature, the phase change takes place, accompanied by expansion. This drives the piston 32. The piston is mechanically coupled to a piston 50 of the heating vessel.

The heating vessel piston 50 is within the heating vessel 10. The mechanical coupling between the piston 32 of the piston pump and the heating vessel piston 50 provides an amplification of the movement (and hence a reduction in force) between the piston 32 and piston 50. The phase change may for example induce an expansion with a force of 1000's of Newtons, so that a reduction of force to achieve an increase in the displacement volume is achievable. The movement of the heating vessel piston is for the displacement of the liquid out of the heating vessel to the drinks preparation unit 40.

A small piston pump may be used to induce the desired liquid displacement from the heating vessel. The mechanical coupling thus preferably has a low mechanical advantage, such as below 0.1 or below 0.05, thereby taking advantage of the large force available from the expansion process to deliver a large amount of liquid displacement.

A compromise is found between the volume of the phase change material (e.g. wax) needed and the amount of force that is exerted.

The heating vessel may be opened by the user for refilling. For this purpose, the heating vessel piston 50 is for example removable from the heating vessel to allow refilling of the heating vessel.

For example, the heating vessel piston may be automatically removed from the heating vessel at the end of the brewing. Thus, when the piston pump reaches the end of its stroke, it will trigger the heating vessel to be opened automatically. A spring based arrangement may be used for this purpose. The piston 50 may function as a lid of the heating vessel but there may equally be another lid. Thus, the piston 50 may need to be removed (as shown in the drawings) or else the heating vessel may be filled through the piston or beneath the piston (through a valve).

A heating vessel lid (additional to the piston 50) may for example be opened as soon as the piston pump reaches the end of its stroke, or else the piston pump may need to cool first to allow the piston 50 to be raised. If an additional lid is opened, the user may then be required to manually remove the piston 50 for refilling.

For cooling the piston pump, if water is added to the heating vessel (e.g. through the open lid), the cool water will cool the phase change material, lowering the piston pump piston, allowing more water to be added and the device to be used again. By refilling the heating vessel before the phase change material cools in this way, this has the advantage that the heat stored in the phase change material is transferred from the phase change material to the water, thereby performing a pre-heating function, saving energy that would otherwise be wasted. Phase change materials such as paraffin are used as thermal energy storage in large scale industrial systems, and are for example being investigated for home heat storage through the seasons.

Alternatively, the phase change material can cool on its own, taking a longer time but also allowing the device to be ready again.

When the heating vessel is open (either with an open lid or with the piston 50 lifted out), the heater is preferably automatically turned off Only after the heating vessel lid is closed, the heater can turn on and heat the phase change material and water. A micro switch may be used to control the operation of the heater.

The heating vessel is thus able to be filled by the user after use. It may in one example contain enough liquid for only one portion (e.g. mug or jug) of the hot drink, and is thus driven by the piston pump from full to empty as one process. This example is for example based on brewing one mug at a time, and the boiler is a vessel sealed with a lid. The lid allows more water to be added and there is no separate water container.

The lid 46 of the hot drinks preparation unit may also open when the piston pump reaches the end of its stroke, i.e. when all of the heated water has been delivered.

The lid 46 is for example spring-loaded with the spring being tensioned on closing. When the piston pump or the heating vessel piston reaches the end of its stroke, it can engage with a knob or a latch that releases the spring.

In this way, the lid 46 also automatically opens at the end of the preparation of the hot drink, so that it can be seen that the drink substrate is spent, and hence needs to be removed and replaced with a new substrate for the next hot drink preparation.

Each time a drink is made, the heating vessel is filled with the desired amount of water, and the heating of the liquid itself induces pumping of the liquid out of the heating vessel. In this one-drink-only arrangement, all the liquid is delivered to the hot drinks preparation unit and the user can adjust the strength and dose by adjusting the amount of liquid.

Figure 2 also shows an interrupt switch 60 for interrupting electric power to the electric heater. The interrupt switch may for instance be opened in response to opening of the lid 46 of the container so that when the brewing is complete, the electric heater 16 is automatically turned off. This control of the interrupt switch is represented schematically by control input 62.

As well or instead, the heating vessel piston or the piston pump piston may be used to control the power to the heater to prevent overheating. If either piston has reached the end of its stroke, there is no more water to be heated, so the power should be turned off. The opening event of a lid of the heating vessel can also be coupled to the control of the heater.

When the lid 46 of the hot drinks preparation unit 40 is involved in the control of the heater (by a switch or other electronic arrangement), the closing of the lid 46 can be used to turn on the appliance. This would remove the need for any other user interface, giving a lowest cost solution.

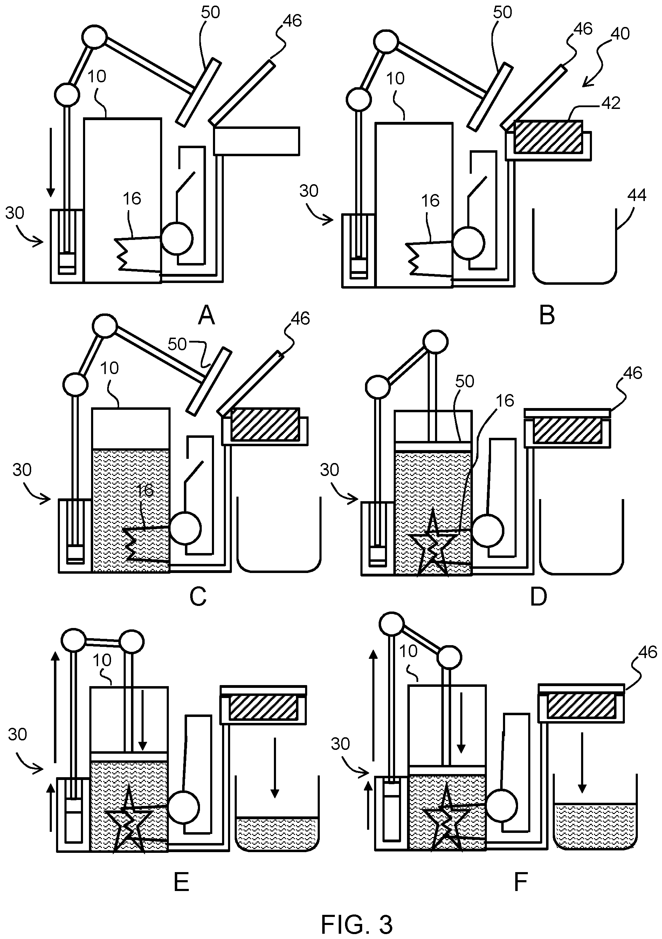

Figure 3 shows the various steps involved in the use of the apparatus of Figure 2 for an example in which the piston 50 is removed from the heating vessel for filling and thus functions as the heating vessel lid..

In Figure 3A, the piston pump is cold, the heating vessel piston 50 is removed from the heating vessel 10, the lid 46 is open and the heater 16 is turned off.

In Figure 3B, a coffee pad 42 is loaded into the preparation unit 40.

In Figure 3C, the heating vessel 10 is filled with water.

In Figure 3D, the heating vessel piston 50 is inserted into the heating vessel 10, and the lid 46 is closed. The interrupt switch is thus turned on and the heater thus on.

In Figure 3E, the water reaches the temperature for the piston pump to drive the piston 50 and thereby displace hot water out of the heating vessel 10.

A single stroke is used to displace all the water needed to form the coffee drink (this is not necessarily all the water in the heating vessel) so that the drink preparation is complete, as shown in Figure 3F.

The lid 46 then opens to stop the heating of water and to allow removal of the spent coffee puck. The heating vessel piston 50 can also be removed or else is ejected automatically. Thus, the piston pump cools and the apparatus returns to the state shown in Figure 3A.

The user may need to wait for the piston pump to cool. Alternatively, the joint directly above the piston 50 may be connected to a lid as mentioned above. The lid then opens, allowing the user to lift up the piston and add more cold water, which lowers the temperature in both the boiler vessel 10 and the piston pump 30 containing the phase change material.

The heating vessel piston 50 may be able to lift without creating a vacuum by virtue of the connection to the hot drinks preparation unit. In some embodiments, a check valve may be provided between the heating vessel 10 and the hot drinks preparation unit 40 to ensure there can be no back flow from the hot drinks preparation unit back to the heating vessel. In such case, an aeration valve may be provided in the head of the piston 50 to allow the rising of the piston head without creating a vacuum.

The example above makes use of a piston pump to extract water from the heating vessel in one stroke.

Another example may use multiple strokes to perform a series of pumping cycles rather than a single displacement.

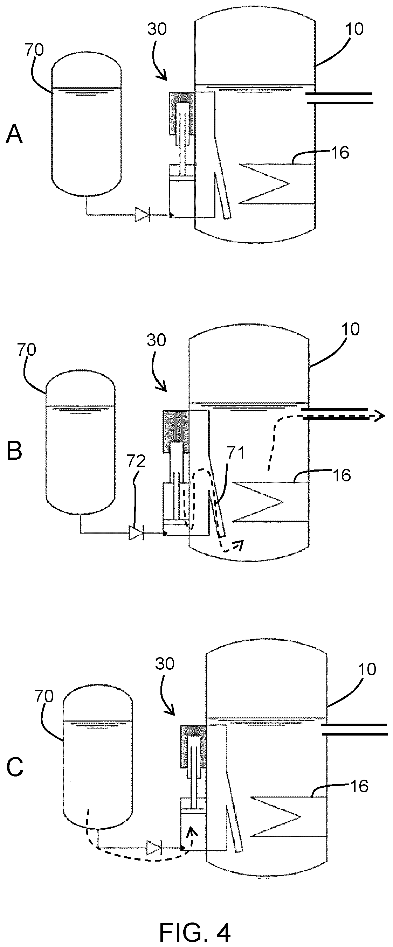

Figure 4 shows an example that does not fall under the scope of the claims. In this example a series of piston pump strokes is used to displace water, and also the pumping is into the heating vessel to replenish the heating vessel while (or after) hot water is removed.

Figure 4 (that does not fall under the scope of the claims) again shows a heating vessel 10 with an electric heater 16, and an external piston pump 30. However, the piston pump 30 is for transferring water from a separate liquid supply reservoir 70 for containing cold liquid (i.e. not heated by the heater). Movement of the piston 32 of the piston pump is for the displacement of liquid into the heating vessel 10 from the liquid supply reservoir 70.

As the heating vessel 10 is emptied to make a hot drink, it can be replenished by the piston pump. The heating vessel is refilled by a sequence of pump cycles. This arrangement pumps water through the heating vessel and into the beverage medium (not shown) for as long as the heater is providing heat. The force delivered by the piston is sufficient to deliver water to the heating vessel and also drive water from the heating vessel to the hot drinks preparation unit (not shown).

At the start of use, the heating vessel is for example opened, filled and then closed. With no venting, the liquid level will remain constant in the heating vessel, so that water is pumped into the heating vessel and out at the same time and rate. The air above the water creates a pressure head so that the heating vessel fills and empties at the same rate.

Figure 4A shows the heating vessel with water below the phase change temperature.

When the water in the heating vessel reaches the phase change temperature, the piston pump is activated to deliver water from piston pump into the heating vessel 10.. This is shown in Figure 4B. There is a mixing spout which also functions as a one way valve 71 allowing flow only into the heating vessel 10.

The mixing spout makes sure cold water is delivered into the heating vessel 10 at a location close to the heating element to ensure the cold water will be heated by the heating element. The outlet of the heating vessel to the hot drinks preparation unit (the hot drinks preparation unit is not shown) is preferably arranged relative to the heating element 16 and mixing spout 71 in such a way that cold water entering the heating vessel cannot easily bypass the heating element. In other words, the cold water will be heated before leaving the heating vessel towards the hot drinks preparation unit.

Another one way valve 72 only allows flow from the reservoir 70 to the heating vessel. Thus, the pump output can only be directed into the heating vessel.

The addition of the water previously in the piston pump causes a drop in temperature in the heating vessel. The piston pump then cools so the piston retracts. Cold liquid from the liquid supply reservoir 70 is then drawn into the piston pump through the valve 72.

This is shown in Figure 4C.

In this way, one part of the pump cycle draws water from the liquid supply reservoir 70 to the piston pump through the one-way flow valve 72, and the other part of the pump cycle delivers liquid from the piston pump into the heating vessel and from the heating vessel to the outlet (as shown in Figure 4B), which leads to the hot drinks preparation unit.

The liquid in the vessel is then heated until it reaches the desired temperature again. Another portion of liquid from the liquid piston pump is then added and the system cycles between Figure 4B and 4C. Thus, while the heating vessel is being refilled, the temperature remains in a desired range, so that the liquid can continue to be used for making a hot drink.

The water container 70 is larger than the heating vessel, even though it is shown oppositely in the figures for simplicity. As explained above, the piston pump delivers the heated water to the hot drinks preparation unit, but there may be a separate output pump. The heating vessel is for example sized for one delivery (one mug or jug).

The examples above make use of a piston pump. An alternative that does not fall under the scope of the claims is for the expansion of the phase change material to directly displace the water.

For example (not falling under the scope of the claims), the phase change material may be housed in an expandable container, and the container is in the heating vessel itself. Expansion of the phase change material provides direct displacement of the liquid out of the heating vessel for use in preparing the hot liquid drink.

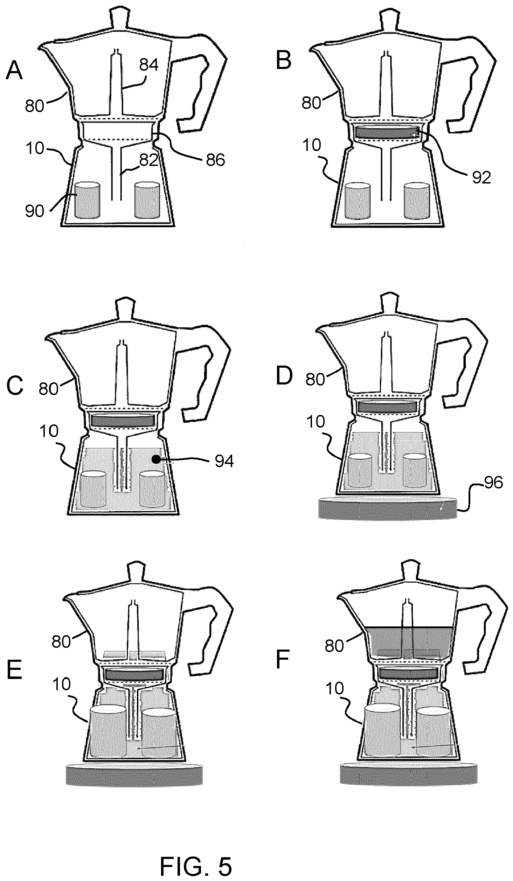

Figure 5 shows this concept applied to a Moka coffee pot, that does not fall under the scope of the claims.

A Moka coffee pot has a lower heating vessel 10 and a top storage vessel 80 for storing the hot liquid drink. The heating vessel has an outlet 82 which is coupled to an inlet 84 of the storage vessel, and a holder 86 is provided for containing a drink substrate (coffee grounds) between the outlet 82 of the heating vessel and the inlet 84 of the storage vessel.

Hot water is normally transferred from the heating vessel 10 to the storage vessel 80, through the drink substrate, by pressure generated during boiling. However, the use of displacement based on the volume change during expansion of the phase change material allows liquid displacement from the heating vessel to the storage vessel at a lower temperature.

Figure 5A shows the heating vessel with two phase change material bodies 90 placed in the heating vessel.

Figure 5B shows the apparatus after coffee grounds 92 have been placed in the holder.

Figure 5C shows the apparatus after cold water 94 (or warm water but below the phase change temperature) has been placed in the heating vessel.

Figure 5D shows the application of heat from an external heater, such as a cooker hob 96.

Figure 5E shows the initial displacement of water to the storage vessel.

Figure 5F shows the completion of displacement of water to the storage vessel.

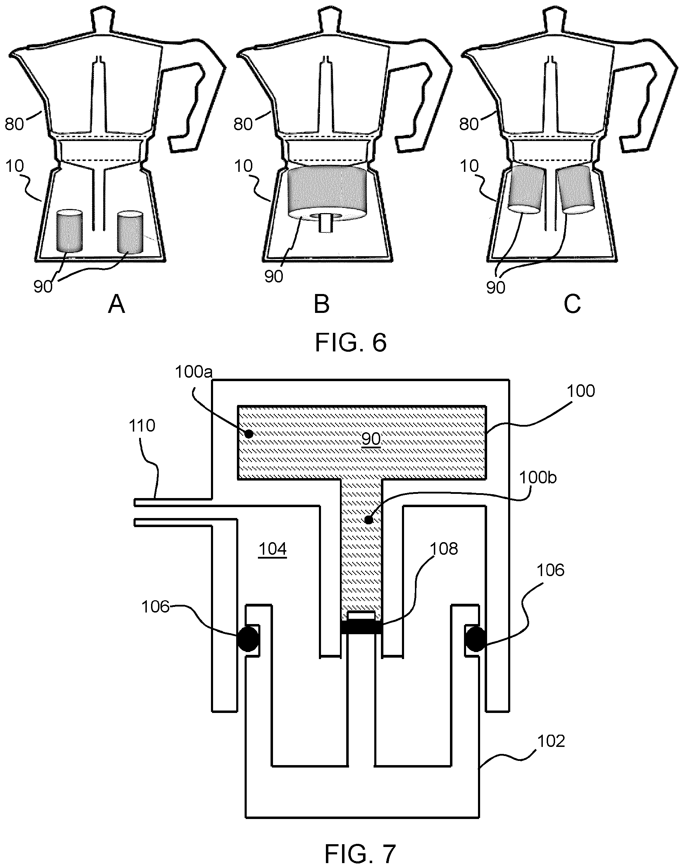

Figure 6, that does not fall under the scope of the claims, shows three different possible configurations for the phase change material.

Figure 6A shows two separate bodies 90 in the base of the heating vessel.

Figure 6B shows a single body 90 around the outlet of the heating vessel.

Figure 6C shows two separate bodies 90 suspended above the base of the heating vessel, attached beneath the holder.

There may be a 1:1 relationship between the expansion of the phase change material, as shown in Figures 5 and 6. However, this may require a large volume of phase change material to displace a desired amount of water.

The phase change material contained in the heating vessel may be associated with a mechanical advantage system so that the expansion of the phase change material is associated with a larger volume change and hence large volume displacement of water.

Figure 7 shows an example in schematic form, in which the phase change material is used within a slightly different implementation of a piston pump, whereby the overall change in volume of the piston pump is of interest, rather than the linear driving of a piston rod. The piston pump of Figure 7 can for instance advantageously be used in the coffee machines of Figures 5 and 6 (that do not fall under the scope of the claims), acting as internal piston pump (as opposed to the external piston pumps shown in Figures 2 to 4).

The phase change material 90 is contained within a chamber 100. The chamber has a main expansion body area 100a and a drive column 100b. The piston 102 is driven by the column 100b. An external surface of the piston 102 has a larger surface area than the column, so that a small amount of volume expansion along the column is converted to a large amount of volume expansion of the overall piston pump, thus displacing a larger volume of water. There is an air chamber 104 behind the piston, and seals 106, 108 isolate the air chamber from the water around the piston pump. The air chamber is vented by an air intake 110 which is coupled to the ambient air surroundings. This air intake allows the piston 102 to move in and out, following the expansion of the phase change material. Thus, a small volume expansion is converted to a large volume displacement.

A spring (not shown) may be used to return the piston as there is no significant adhesive force between the phase change material and the piston.

It is noted that the design of Figure 7 provides an amount of linear movement of the piston not simply proportional to the volume expansion (because the volume expansion involves a change in shape, wherein only the drive column increases in size). A linear relationship would result from a cylinder which simply expands in length. A similar scaling approach may be adopted in the external piston pump of Figures 2 to 4 (with Figure 4 not falling under the scope of the claims).

It is also noted that the designs of Figures 2 to 4 could also employ the internal piston pump of Figure 7. Of course, the thermal coupling is achieved more straightforwardly when the piston pump is submerged in the liquid.

In all examples above, the phase change material is selected to undergo a significant volume expansion on melting, and at a temperature in a desired temperature range for the hot drink. Thus, the apparatus provides self-regulation of the temperature without needing thermostatic control.

The phase change material is for example a wax such as paraffin wax. The exploitation of the expansion of waxes upon melting is known, for example in wax motors and wax valve regulators. Stearin wax may also be used. Indeed, any wax-like material may be used, though for higher temperatures straight-line waxes are preferred.

In theory, an approach based on a memory-metal like system (with different phases corresponding to different shape characteristics) could also be used, and a liquidgas phase change could also be used. However paraffin waxes are cheap, non-toxic, and the melting point or range can be adjusted by familiar chemical choices.

The invention has been described above with reference to a coffee maker. However, the invention may be used for pumping liquids other than water, such as milk or other water-based drinks.

Variations to the disclosed embodiments can be understood and effected by those skilled in the art in practicing the claimed invention, from a study of the drawings and the disclosure, within the scope of the appended claims. In the claims, the word "comprising" does not exclude other elements or steps, and the indefinite article "a" or "an" does not exclude a plurality. A single processor or other unit may fulfill the functions of several items recited in the claims. If the term "adapted to" is used in the claims or description, it is noted the term "adapted to" is intended to be equivalent to the term "configured to". Any reference signs in the claims should not be construed as limiting the scope.

## Claims

1. An apparatus for preparing a hot liquid drink, comprising:
a heating vessel (10) for storing a liquid which is to form the basis of the hot liquid drink, the heating vessel being adapted to receive heat from a heater (16); and
a phase change material (18, 90) having a phase change temperature which falls in a desired temperature range for the hot liquid drink, wherein the phase change material is thermally coupled with the liquid,
a piston pump (30) having a piston (32) within a chamber (34),
a heating vessel piston (50) within the heating vessel (10), and
a mechanical coupling between the piston (32) of the piston pump and the heating vessel piston (50), wherein the mechanical coupling provides an amplification between the movement of the piston (32) of the piston pump and the heating vessel piston (50),
wherein an expansion of the phase change material when it changes phase induced by heating is used to drive movement of the piston (32) within the chamber (34), which drives movement of the heating vessel piston (50) for displacement of the liquid out of the heating vessel for use in preparing the hot liquid drink.

2. An apparatus as claimed in claim 1, wherein the piston pump (30) is mounted on the outside of the heating vessel.

3. An apparatus as claimed in claim 1 or 2, wherein the heating vessel piston (50) is removable from the heating vessel to allow refilling of the heating vessel.

4. An apparatus as claimed in any of claims 1 to 3, further comprising a holder (40) for containing a drink substrate (42), wherein the holder (40) is coupled to the heating vessel to receive the liquid displaced out of the heating vessel.

5. An apparatus as claimed in any of claims 1 to 4, wherein the heater (16) is an electric heater and the apparatus further comprises an interrupt switch for interrupting electric power to the electric heater, wherein the interrupt switch is opened when the piston pump reaches the end of its stroke.

6. An apparatus as claimed in claim 5, wherein the holder comprises a lid (46), and wherein the lid is adapted to open when the piston pump reaches the end of its stroke.

7. An apparatus as claimed in and claim 6, wherein the heater (16) is an electric heater and the apparatus further comprises an interrupt switch for interrupting electric power to the electric heater, wherein the interrupt switch is opened in response to opening of the lid of the container.

8. An apparatus as claimed in any preceding claim wherein the apparatus is a coffee maker.

9. A method of preparing a hot liquid drink, comprising:
storing a liquid which is to form the basis of the hot liquid drink in a heating vessel;
heating the liquid in the heating vessel;
using the heat of the liquid to induce a phase change in a phase change material, thereby creating expansion of the phase change material;
using the expansion of the phase change material to drive a piston pump; and
using the piston pump for driving a piston in the heating vessel using a mechanical coupling with amplification between the movement of the piston (32) of the piston pump and a piston in the heating vessel, thereby to drive displacement of the liquid out of the heating vessel for use in preparing the hot liquid drink.

## Patentansprüche

1. Vorrichtung zur Zubereitung eines heißen flüssigen Getränks, umfassend:
ein Heizgefäß (10) zum Speichern einer Flüssigkeit, die die Grundlage für das heiße flüssige Getränk bilden soll, wobei der Heizbehälter dazu geeignet ist, Wärme von einer Heizvorrichtung (16) aufzunehmen; und
ein Phasenwechselmaterial (18, 90) mit einer Phasenwechseltemperatur, die in einem gewünschten Temperaturbereich für das heiße flüssige Getränk liegt, wobei das Phasenwechselmaterial thermisch mit der Flüssigkeit gekoppelt ist,
eine Kolbenpumpe (30) mit einem Kolben (32) innerhalb einer Kammer (34),
einen Heizgefäßkolben (50) innerhalb des Heizgefäßes (10) und
eine mechanische Kopplung zwischen dem Kolben (32) der Kolbenpumpe und dem Heizgefäßkolben (50), wobei die mechanische Kopplung eine Verstärkung zwischen der Bewegung des Kolbens (32) der Kolbenpumpe und des Heizgefäßkolbens (50) bereitstellt,
wobei eine durch Erwärmung induzierte Ausdehnung des Phasenwechselmaterials beim Phasenwechsel genutzt wird, um die Bewegung des Kolbens (32) innerhalb der Kammer (34) anzutreiben, die die Bewegung des Heizgefäßkolbens (50) zum Verdrängen der Flüssigkeit aus dem Heizgefäß zur Verwendung bei der Zubereitung des heißen flüssigen Getränks antreibt.

2. Vorrichtung nach Anspruch 1, wobei die Kolbenpumpe (30) an der Außenseite des Heizgefäßes montiert ist.

3. Vorrichtung nach Anspruch 1 oder 2, wobei der Heizgefäßkolben (50) vom Heizgefäß abnehmbar ist, um ein Nachfüllen des Heizgefäßes zu ermöglichen.

4. Vorrichtung nach einem der Ansprüche 1 bis 3, weiterhin umfassend einen Halter (40) zur Aufnahme eines Getränkesubstrats (42), wobei der Halter (40) mit dem Heizgefäß gekoppelt ist, um die aus dem Heizgefäß verdrängte Flüssigkeit aufzunehmen.

5. Vorrichtung nach einem der Ansprüche 1 bis 4, wobei die Heizvorrichtung (16) eine elektrische Heizvorrichtung ist und die Vorrichtung außerdem einen Unterbrechungsschalter zum Unterbrechen der elektrischen Stromversorgung der elektrischen Heizvorrichtung aufweist, wobei der Unterbrechungsschalter geöffnet wird, wenn die Kolbenpumpe das Ende ihres Hubs erreicht.

6. Vorrichtung nach Anspruch 5, wobei der Halter einen Deckel (46) umfasst und wobei der Deckel dazu ausgelegt ist, sich zu öffnen, wenn die Kolbenpumpe das Ende ihres Hubs erreicht.

7. Vorrichtung nach Anspruch 6, wobei die Heizvorrichtung (16) eine elektrische Heizvorrichtung ist und die Vorrichtung außerdem einen Unterbrechungsschalter zum Unterbrechen der elektrischen Energieversorgung der elektrischen Heizvorrichtung aufweist, wobei der Unterbrechungsschalter als Reaktion auf das Öffnen des Deckels des Behälters geöffnet wird.

8. Vorrichtung nach einem der vorhergehenden Ansprüche, wobei es sich bei der Vorrichtung um eine Kaffeemaschine handelt.

9. Verfahren zur Zubereitung eines heißen flüssigen Getränks, umfassend:
Lagern einer Flüssigkeit, die die Grundlage für das heiße Flüssiggetränk bilden soll, in einem Heizgefäß;
Erhitzen der Flüssigkeit im Heizgefäß;
Verwenden der Wärme der Flüssigkeit, um einen Phasenwechsel in einem Phasenwechselmaterial herbeizuführen, wodurch eine Ausdehnung des Phasenwechselmaterials erzeugt wird;
Nutzung der Ausdehnung des Phasenwechselmaterials zum Antrieb einer Kolbenpumpe; und
Verwenden der Kolbenpumpe zum Antreiben eines Kolbens im Heizgefäß unter Verwendung einer mechanischen Kopplung mit Verstärkung zwischen der Bewegung des Kolbens (32) der Kolbenpumpe und eines Kolbens im Heizgefäß, um dadurch eine Verdrängung der Flüssigkeit aus dem Heizgefäß zur Verwendung bei der Zubereitung des heißen flüssigen Getränks voranzutreiben.

## Revendications

1. Appareil pour préparer une boisson liquide chaude, comprenant :
un récipient de chauffage (10) pour stocker un liquide qui doit former la base de la boisson liquide chaude, le récipient de chauffage étant adapté pour recevoir de la chaleur provenant d'un élément chauffant (16); et
un matériau à changement de phase (18, 90) ayant une température de changement de phase qui se situe dans une plage de températures souhaitée pour la boisson liquide chaude, où le matériau à changement de phase est thermiquement couplé au liquide,
une pompe à piston (30) ayant un piston (32) à l'intérieur d'une chambre (34),
un piston pour récipient de chauffage (50) à l'intérieur du récipient de chauffage (10), et
un couplage mécanique entre le piston (32) de la pompe à piston et le piston du récipient de chauffage (50), où le couplage mécanique assure une amplification entre le mouvement du piston (32) de la pompe à piston et le piston du récipient de chauffage (50),
où une expansion du matériau à changement de phase lorsqu'il change de phase induite par le chauffage est utilisée pour entraîner le mouvement du piston (32) à l'intérieur de la chambre (34), ce qui entraîne le mouvement du piston du récipient de chauffage (50) pour déplacer le liquide vers l'extérieur du récipient de chauffage destiné à être utilisé pour la préparation de la boisson liquide chaude.

2. Appareil tel que revendiqué dans la revendication 1, dans lequel la pompe à piston (30) est montée à l'extérieur du récipient de chauffage.

3. Appareil tel que revendiqué dans la revendication 1 ou 2, dans lequel le piston du récipient de chauffage (50) est amovible du récipient de chauffage pour permettre le remplissage du récipient de chauffage.

4. Appareil tel que revendiqué dans l'une quelconque des revendications 1 à 3, comprenant en outre un support (40) pour contenir un substrat de boisson (42), dans lequel le support (40) est couplé au récipient de chauffage pour recevoir le liquide déplacé hors du récipient de chauffage.

5. Appareil tel que revendiqué dans l'une quelconque des revendications 1 à 4, dans lequel l'élément chauffant (16) est un élément électrique chauffant et l'appareil comprend en outre un interrupteur pour interrompre l'alimentation électrique de l'élément électrique chauffant, où l'interrupteur est ouvert lorsque la pompe à piston atteint la fin de sa course.

6. Appareil tel que revendiqué dans la revendication 5, dans lequel le support comprend un couvercle (46), et dans lequel le couvercle est adapté pour s'ouvrir lorsque la pompe à piston atteint la fin de sa course.

7. Appareil tel que revendiqué dans la revendication 6, dans lequel l'élément chauffant (16) est un élément électrique chauffant et l'appareil comprend en outre un interrupteur pour interrompre l'alimentation électrique de l'élément électrique chauffant, où l'interrupteur est ouvert en réponse à l'ouverture du couvercle du récipient.

8. Appareil tel que revendiqué dans l'une quelconque des revendications précédentes, dans lequel l'appareil est une cafetière.

9. Procédé de préparation d'une boisson liquide chaude, consistant à:
stocker un liquide qui doit constituer la base de la boisson liquide chaude dans un récipient de chauffage;
chauffer le liquide dans le récipient de chauffage;
utiliser la chaleur du liquide pour induire un changement de phase dans un matériau à changement de phase, créant ainsi une expansion du matériau à changement de phase;
utiliser l'expansion du matériau à changement de phase pour entraîner une pompe à piston; et
utiliser la pompe à piston pour entraîner un piston dans le récipient de chauffage en utilisant un couplage mécanique avec amplification entre le mouvement du piston (32) de la pompe à piston et un piston dans le récipient de chauffage, pour ainsi entraîner le déplacement du liquide hors du récipient de chauffage destiné à être utilisé pour la préparation de la boisson liquide chaude.
